# EUROPEAN PATENT SPECIFICATION

(11) **EP 2 393 226 B1**
(45) Date of publication and mention of the grant of the patent: **24.07.2013**
(21) Application number: 10382165.8
(22) Date of filing: 07.06.2010
(51) Int. Cl.: H04H 20/02, H04B 7/155, H04B 1/00

(54) **Television channel amplification system**
Fernsehkanalverstärkungssystem
Système d'amplification de canal de télévision

(43) Date of publication of application: 07.12.2011
(73) Proprietor: Angel Iglesias S.A., 20009 San Sebastian (ES)
(72) Inventor: Dominguez Bonini, David, 20009, San Sebastian (ES); Campo Pablos, Miguel, Ángel, 20009, San Sebastian (ES); Pérez Dominguez, Borja, 20009, San Sebastian (ES); Sanchez Ponte, Mikel, 48170, Zamudio (Bizkaia) (ES); Del Ser Lorente, Javier, 48170, Zamudio (Bizkaia) (ES); Prieto Arce, Pablo, 48170, Zamudio (Bizkaia) (ES)
(74) Representative: Carpintero Lopez, Francisco

(56) References cited:
- EP-A1- 1 912 348
- US-A1- 2009 046 616
- US-A1- 2009 282 441

## Description

### Field of the Invention

The present invention applies to the field of telecommunications, and more specifically, to digital video broadcast (DVB).

### Background of the Invention

In either analog or digital television (TV) channel broadcast systems, in which there is frequency channel multiplexing, it is common to receive said frequency channels with different power levels. This is because not all the channels are transmitted by the same antennas, which leads to different losses due to free space, due to the directionality of the transmitting and receiving antennas, etc. Nevertheless, for the correct display of said television channels, it is necessary to have a minimum signal power, typically established by law, which makes it necessary to include amplifying stages which increase the power of the television channels received.

A first option is to equally amplify the entire band in which said channels are transmitted, typically the UHF (Ultra High Frequency, between 470 and 862 Mhz) band, but given that there are considerable differences between the powers with which each channel is received, this mode of amplification is not only inefficient, but it can give rise to channels with excessively high powers and which are not valid for display.

Therefore, there is a need for multichannel transceiver systems which individually amplify each frequency channel, for example in television distribution systems that are close to the end user, such as neighborhood community television headends. Another case in which said transceivers are necessary are the TV repeaters (also referred to as gap-fillers), where it is necessary to filter and amplify each of the TV channels received from the primary network to transmit them through the secondary network at the same frequency for single frequency networks (SFN) and at different frequencies for multifrequency networks (MFN). US 5,535,240 describes an example of a multichannel transceiver, specifically using a Fast Fourier Transform (FFT) channelizer and combiner. EP1912348 discloses a TV broadcast signal relay system including several parallel analog amplification chains and in a distinguished embodiment, a single chain including digital converters.US 5,812,605 also describes a digital transceiver, in this case using a plurality of receiving antennas.

Additionally, TV (analog and digital) standards restrict the separation between channels. For example, the configuration of terrestrial digital video broadcast (DVB-T) used in Spain is fixed at a separation between channels of 8 MHz for bandwidths of each channel of 7.61 MHz. This means that the separation between a channel and the adjacent one is barely 380 KHz, which is much less than the bandwidth of a channel. If it is added that according to the DVB-T standard the adjacent channel power ratio (ACPR) must be at least 50 dB, it can be concluded that in order to individually filter television channels it is necessary to have filters with a high selectivity, and therefore of a high order. Traditional analog filters made with discrete components have little flexibility and are not typically used for high orders, so it is necessary to resort to surface acoustic wave (SAW) analog filters or to digital filters.

Systems based on SAW filters are based on a heterodyne receiver/transmitter with a pass to an intermediate frequency (IF), typically at 36 Mhz. The filtering and amplification are therefore performed analogically and channel by channel. The high selectivity required is provided by the SAW filters by means of components suitable for industry on a printed circuit.

There are also single channel systems based on digital processing of the signal in which the selective filtering of the channel is performed by means of a finite impulse response (FIR) filter, typically of about 100 weights (also referred to as taps). These filters are generated by means of programmable logic devices, have greater linearity than analog filters and allow greater flexibility when migrating systems to other radio broadcast configurations or other standards. US 5,299,192 describes an example of a digital demultiplexer with single channel filters.

Both the solutions based on analog SAW filters and those based on digital filters operate channel by channel, following a cascade structure, and therefore are neither flexible nor scalable against changes in radio broadcast plans. It should be pointed out that said plans are not closed, but rather allow the incorporation of new frequency channels once an operator has obtained the corresponding license. Therefore, either the maximum possible number of single channel filters and amplifiers are installed from the start, which is a clear waste of resources given that many of said channels are not being used, or the assistance of a technician in charge of reconfiguring or adding the corresponding single channel modules is required for each new frequency channel used.

In addition to these problems, the cost, consumption and complexity of the solutions described in the state of the art increase linearly with the number M of channels.

Therefore there continues to be a need in the state of the art for systems which allow amplifying the power of each frequency channel individually in an efficient, scalable manner which optimizes the consumption and the complexity of the system.

### Summary of the Invention

The present invention solves the problems described above by means of a television channel amplification system in which said amplification is performed digitally by means of transceiver modules, each of which operates on a sub-set of television channels. The system operates on an analog input signal it receives through receiving means, such as an antenna, or simply an input connection from another device of a communications system of which it is part. The analog input signal comprises a plurality of multiplexed analog television channels, typically in the UHF band.

The system comprises a power divider which makes the analog input signal reach all the transceiver modules, and preferably a low noise amplifier before said power divider to increase the power of the input signal by minimizing the noise introduced given that the first amplification stages are more critical for the resulting signal-to-noise ratio. The outputs of the transceiver modules, the operation of which is described below, are combined in an output signal, which is preferably amplified by means of an amplifier located at the output of the system.

Given that the amplification is performed digitally in baseband, each transceiver module comprises conversion means which allow digitalizing the input signal, as well as at least one filter by means of which a sub-set of M channels is selected on which said module operates (it is assumed that the number M is constant for all the transceiver modules, even though the system can also be designed using different values for different modules). Once the selected and digitalized channels are available, their power is equalized to a target power by gain control means.

Said gain means, also referred to herein as automatic gain control (AGC), preferably in turn comprise means for estimating the power of each channel, comparing it with a target power, and amplifying each channel to reach said target power. It must be noted that the amplification of all the channels of the sub-set is performed simultaneously by means of one and the same amplifier of the transceiver module thanks to the time multiplexing of the channels. To that end, the amplification means more preferably comprise delay means which delay the application of the gain necessary for obtaining the target power during the intervals in which other channels are multiplexed.

The filtering of the sub-set of M channels is also preferably performed by means of a polyphase filter, and likewise, each transceiver module comprises a polyphase combiner for recombining the channels once they are amplified.

Three preferred options are contemplated for converting the analog signal to a digital signal in baseband on which it is possible to apply the AGC.
- Heterodyne conversion at an intermediate frequency (IF) that is high enough to prevent aliasing, such that the digitization is carried out by means of an analog-to-digital converter (ADC) which operates at said intermediate frequency. The digitalized channels are demodulated by means of an in-phase quadrature (IQ) demodulator.
- Homodyne conversion to baseband by means of analog IQ demodulation. This option is implemented by means of an analog IQ mixer which generates two components, each of which passes through a low pass filter, an AGC and an ADC.
- Direct radio frequency (RF) digitization. In this case, each transceiver module comprises an ADC which operates directly on the radio frequency signal, i.e., on the channels at the same frequency at which they are found at the input of the system.

Each of the three previous options involves a different proportion of analog and digital devices in the system, but they all allow individually amplifying each television channel in the digital domain, and acting on several channels at the same time, therefore allowing an efficient and flexible implementation which can be used both in the secondary television broadcast network and at reception in homes.

The system preferably comprises means for modifying the frequency in which a television channel is multiplexed, both within the frequencies at which a transceiver module works by means of local channel control means (which will be referred to as local channel management unit), and by means of a communication between two different transceiver modules through global channel control means (which will be referred to as global channel management unit). The system is thus provided with great flexibility when changing the frequency of a channel, which allows redistributing frequency-wise the content of the broadcast television signal.

These and other advantages will become apparent in view of the detailed description of the invention.

### Brief Description of the Drawings

For the purpose of aiding to better understand the features of the invention according to an example preferred practical embodiment thereof and to complement this description, the following figures are attached as an integral part thereof with an illustrative and non-limiting character:
Figure 1 shows a diagram of the system of the invention according to a particular embodiment thereof.
Figure 2 presents a diagram of a preferred embodiment of a transceiver module in which a heterodyne conversion with a pass to a high IF is used.
Figure 3 shows a diagram of a preferred embodiment of a transceiver module in which a homodyne conversion is used.
Figure 4 presents a diagram of a preferred embodiment of a transceiver module in which RF digitization is used.
Figure 5 is an example of a digital in-phase quadrature demodulator.
Figure 6 shows a traditionally channeling system with a downlink chain for each television channel of the band.
Figure 7 depicts a channelizer based on a polyphase - FFT filter.
Figure 8 presents an oversampling polyphase analyzer with division in even and odd channels.
Figure 9 shows a comparison of the computational cost between different types of channelizers.
Figure 10 is a frequency depiction of the filtering base in the oversampling polyphase systems presented and their action on the even and odd channels.
Figure 11 exemplifies a time multiplexing of the channels in a single bus.
Figure 12 depicts a selective FIR filter for filtering a television channel.
Figure 13 presents an automatic gain control system according to a preferred embodiment of the invention.
Figure 14 presents a channel management unit.
Figure 15 schematically shows a polyphase combiner of K channels.
Figure 16 depicts a combiner of even and odd channels.

### Detailed Description of the Invention

In this text, the term "comprises" and its derivatives (such as "comprising", etc.) should not be interpreted in an excluding sense, i.e., these terms must not be interpreted as excluding the possibility that what is described and defined can include more elements, stages, etc.

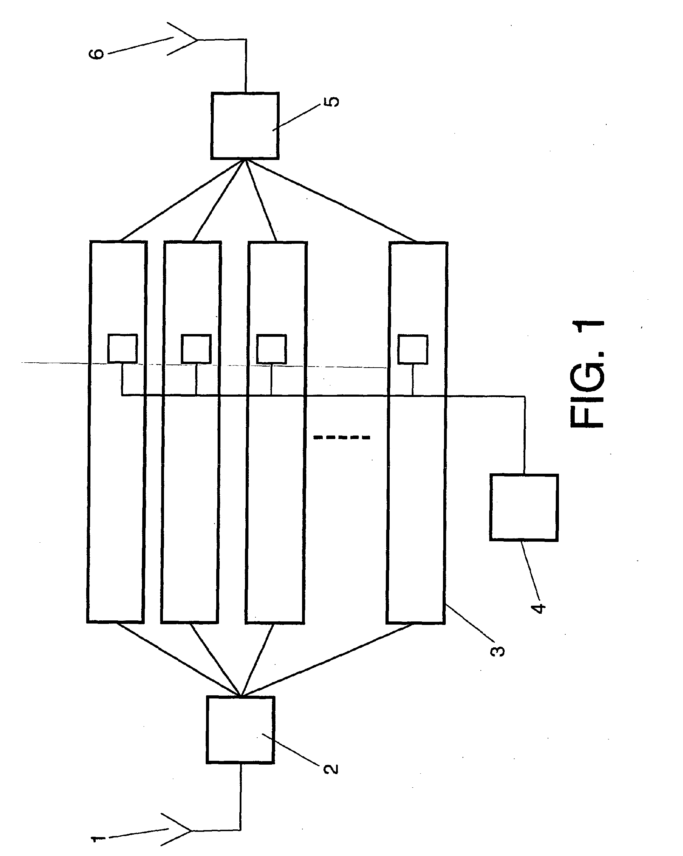

Figure 1 presents a schematic depiction of the system of the invention comprising an analog receiving module and another analog transmission module. The processing, filtering and equalization of power of the channels is performed digitally in baseband.

The system comprises P transceiver modules 3, each of which receives, filters and amplifies M channels. If said number M is constant for all the transceiver modules 3, up to P*M channels can therefore be handled. Said channels are received in the system by receiving means 1 such as an antenna or any input port which allows receiving an input signal with said channels from another element of the communications network. By means of a power divider 2, said input signal is sent to the P modules 3 (i.e., all the modules receive all the channels). The modules 3 are controlled by control means referred to as a global channel management unit (CMU) 4. Finally, the system comprises a combiner 5 which combines the outputs of the modules 3 in a single output signal, and transmission means 6 which transmit said output signal, for example a transmitting antenna or a coaxial cable.

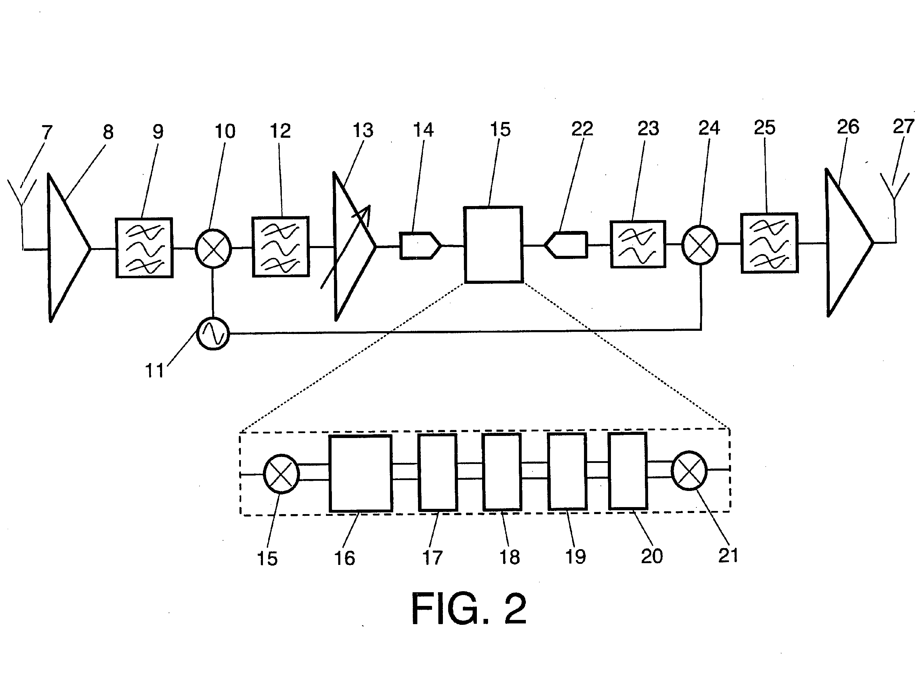

Figure 2 shows a first preferred embodiment of one of the P modules 3 of the system. Each module 3 presents a multichannel solution based on a heterodyne conversion at an IF that is high enough to prevent the aliasing effect, such that the digitization is carried out through a high speed IF ADC. The multichannel TV signal is received from the receiving input 7 which can be, for example, a UHF antenna or cable, passes through a LNA 8 to increase the power of the entire band, and is filtered with a UHF filter 9. Then, a converter 10 at IF reduces the frequency of the channels by means of mixing with a frequency generated by a local oscillator 11. The resulting signal is filtered by means of an IF filter 12 to eliminate unwanted components, and an automatic gain control 13 is applied. The IF signal is subsequently digitized through a high speed ADC 14. In the digital domain, the system consists of an IQ demodulator 15, a polyphase-FFT filter of M channels 16 and a selective channel filter 17. At this point, the M TV channels are presented in IQ baseband and time multiplexed, passing through a digital automatic gain control for equalizing powers 18 and entering the local CMU block 19 for the management thereof. The system subsequently has the uplink chain, with a polyphase-FFT combiner of M channels 20, followed by an IQ modulator 21 which leaves the signal in a digital IF to attack a DAC with interpolating filters 22 and pass to the analog domain. In a manner that is symmetrical to the downlink chain, the signal passes through a low pass reconstruction filter 23, an RF mixer/converter 24, a UHF bandpass filter 25 and a power amplifier 26 to exit the transmitting antenna/cable 27.

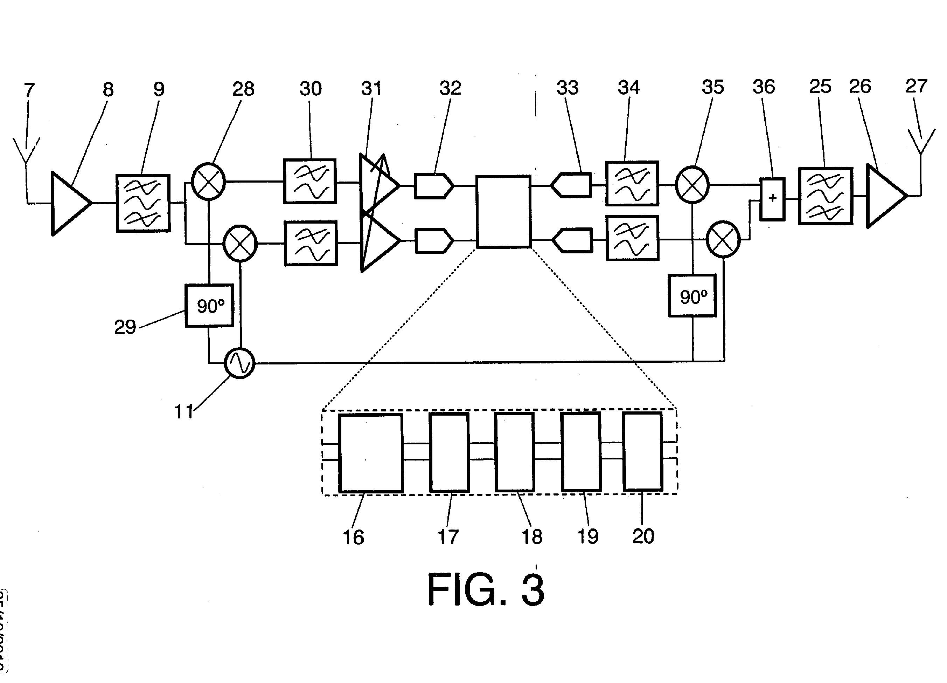

Figure 3 presents a second preferred embodiment of a transceiver module 3, in this case using a direct conversion (also called homodyne) at baseband within the analog domain by means of analog IQ demodulation. This step, also called O-IF conversion, has an analog IQ mixer 28 with two multipliers/mixers, one for mixing with the cosine function of the local oscillator, and the other one for mixing with the sine function 29. It also has IF low pass filters 30 that are less restrictive than those described for the heterodyne conversion, two AGC 31 and two ADC 32, one for each IQ branch. It also has 2 DAC devices 33 in the uplink chain, two low pass reconstruction filters 34 and an up IQ mixer 35 with its corresponding adder 36. The remaining elements are common to the implementation with heterodyne conversion.

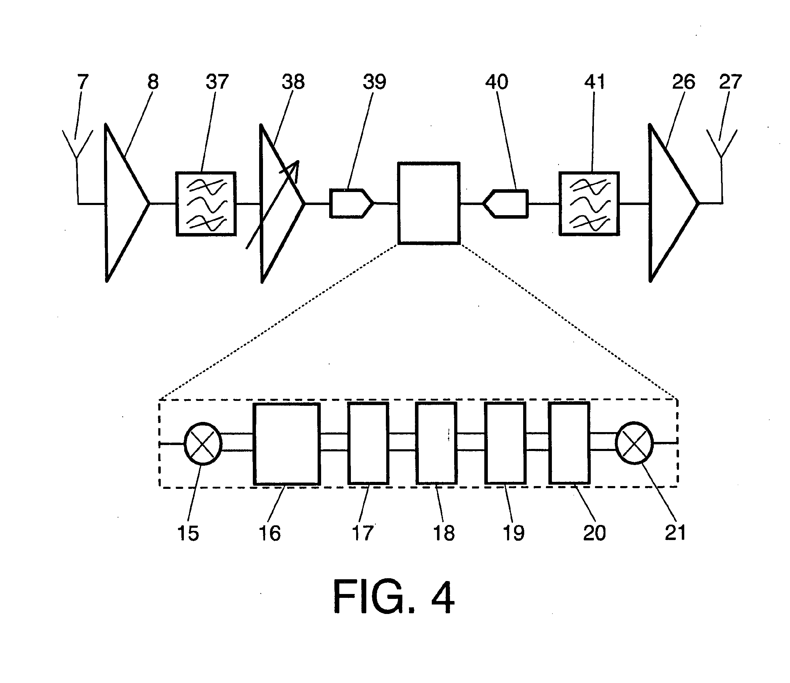

A third preferred embodiment of the transceiver module 3 is presented in Figure 4. In said third embodiment, digital means are used for the mixing and conversion tasks, therefore passing to a radio frequency digitization diagram. The system comprises a UHF filter 37 that is more restrictive than in the previous cases to prevent the aliasing effect, since the signal after being filtered and amplified by means of an amplifier 38, passes directly to being digitized by a high speed ADC 39 by applying undersampling techniques. Similarly, a very high speed DAC with interpolating filters 40 is used at transmission for passing the signal to RF directly without needing mixers and local oscillators. The reconstruction filter 41 can be low pass or bandpass, depending on the sampling frequency of the DAC.

When analyzing in greater detail the receiving part of the transceiver module, the input signal is received by means of a UHF antenna 7 (470 MHz-862 MHz), although it can also be received from a coaxial cable for example. Said signal generally arrives with considerable losses, especially in terrestrial digital TV applications, so its passing through a low noise amplifier 8 is necessary in order to be able to provide at least 20 dB of gain to the channels received.

After the LNA 8, the signal passes through the UHF bandpass filter 9 in which the TV channel band to be received by module P will be selected. The bandwidth of said filter must be at least B*M MHz, B being the bandwidth of each TV channel. In the case of heterodyne and homodyne conversion, the UHF filter can be unrestrictive, being able to use conventional third order LC filters (built with capacitors and inductors). However, in the implementation based on RF digitization, the UHF filter must be very restrictive to prevent aliasing in digitization. In this case, highly selective SAW filters with a width of B*M MHz are used.

The implementations of the invention based on heterodyne and homodyne conversions (direct conversion) pass through a mixing stage between the band received and a frequency generated by a local oscillator 11. This frequency can also be generated by a phase-locked loop (PLL) controlled from a digital processor system to add flexibility to the solution. In the homodyne implementation, the mixing frequency must coincide with the central frequency of the filtered band, two mixers 28 and an offset of 90° 29 being used to obtain the in-phase quadrature baseband signals (0-IF pass). On the other hand, the frequency used in the heterodyne mix is equal to f_{rf} - f_{if}, being able to choose between f_{rf}+f_{if} and f_{rf}-f_{if} depending on the intermodulation products that can occur in either case, fᵣf being the frequency of the radio frequency signal received and f_{if} the intermediate frequency. A double heterodyne conversion with two mixing stages, the first one at higher frequency and the second one for passing from the latter to an intermediate frequency, can also be chosen.

After the mixing stage, the filtering and amplification stage for filtering and amplifying the intermediate frequency signal (for both the homodyne and heterodyne implementations) is performed. At this point, the signal already consists of a useful part which is the passband with a width of B*M MHz, and another part of no interest resulting from the transition bands of the UHF filter and from the intermodulation products occurring after the mixing. In the case of the heterodyne implementation, the intermediate frequency must be chosen according to the width B*M handled by each transceiver module such that it does not exceed 40% of the Nyquist bandwidth fixed by the sampling frequency which is used in the ADC 14. It must also be taken into account that it is suitable to approximately center the intermediate frequency in said Nyquist band to maximally take advantage of the useful bandwidth. The intermediate frequency can theoretically be centered in any of the Nyquist bands, but it is advisable to place it in the second band, since the remaining bands raise more co-channel interference problems after performing the mix. For the case of the homodyne conversion, all that has been discussed is not relevant because, by definition, the intermediate frequency of the homodyne conversion is 0 MHz (i.e., baseband).

The IF filter for the heterodyne conversion consists of a relatively restrictive bandpass filter 12. In practice, it is sufficient with a third order elliptical filter if the condition that the passband does not exceed 40% of the Nyquist bandwidth is met. For the case of the implementation with homodyne conversion, it is sufficient with two third order LC low pass filters 30.

After performing the IF filtering, it is very important to optimally adjust the dynamic range of the signal to the ADC before passing to the analog domain, because resolution and efficiency are otherwise lost. Therefore, since the reception level in the antenna can be variable, a variable gain amplifier (13, 31, 38), which delivers at all times the same power to the ADC, is included in all the implementations of the invention. This is referred to as an analog automatic gain control. The optimal input level to the ADC depends on the technical specifications of the ADC.

The analog/digital converter (14, 32, 39) used has more or less features depending on the implementation of the invention. The homodyne implementation uses a more relaxed ADC 39 because it does not need excessively high sampling frequencies. At least a sampling frequency sf = B*N/0.4 is needed, whereas for the heterodyne receiver at least twice said frequency is necessary. In contrast, it is found that the direct conversion has several drawbacks such as the continuous offset, the unbalancing of the I/Q branches and the phase noise. These drawbacks are corrected by analog elements and/or digital processing, increasing the complexity of the circuit in any manner. On the other hand, the implementation associated with the RF digitization is that which requires a higher sampling frequency, but an enormous advantage is the absolute flexibility which is obtained upon processing the signal exclusively in the digital domain and preventing the problems inherent to the analog conversions described above. Based on the foregoing, the sampling frequency of the ADC of the invention, assuming 7 channels per transceiver module (N=7), is at least 256 Msps. If a higher sampling frequency, for example 512 Msps, is chosen, up to 14 channels per transceiver module can be handled.

The dynamic range of the ADC is directly related to the number M of channels which are processed in the band. The use of ADC with at least 12 bits of resolution is proposed for the invention, although other resolutions can also be used.

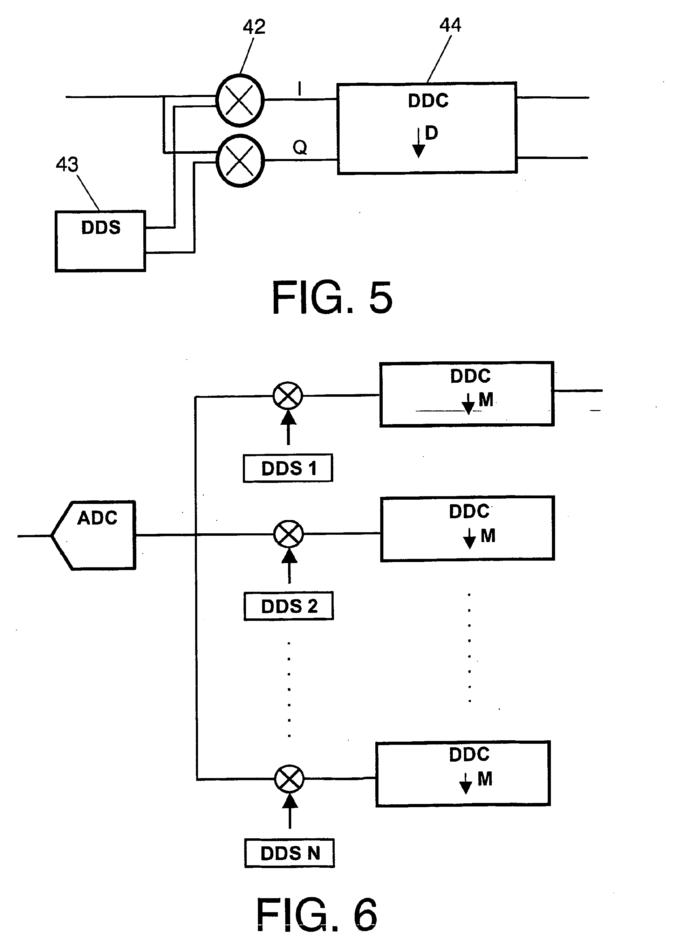

In the case of the heterodyne implementations and RF digitization, an I/Q demodulator is used to pass the signal to baseband. An implementation of said I/Q demodulator is presented in Figure 5. This block has a digital frequency synthesizer 43 to perform the demodulation from IF to baseband which generates a cosine and a sine at the IF frequency. The I/Q signals are generated after the digital multipliers 42. Then it has an FIR filter 44 to prevent aliasing with the image frequency generated in the demodulation. This filter is in turn a decimator to lower the sampling frequency to 2*B*N Msps. In the homodyne implementation, this block is not present because the signal is already digitized in IQ baseband.

Once in baseband and within the digital domain, the invention has well differentiated blocks common for all the implementations: channelizer, filtering, local channel management unit (CMU) and digital output dechannelizer.

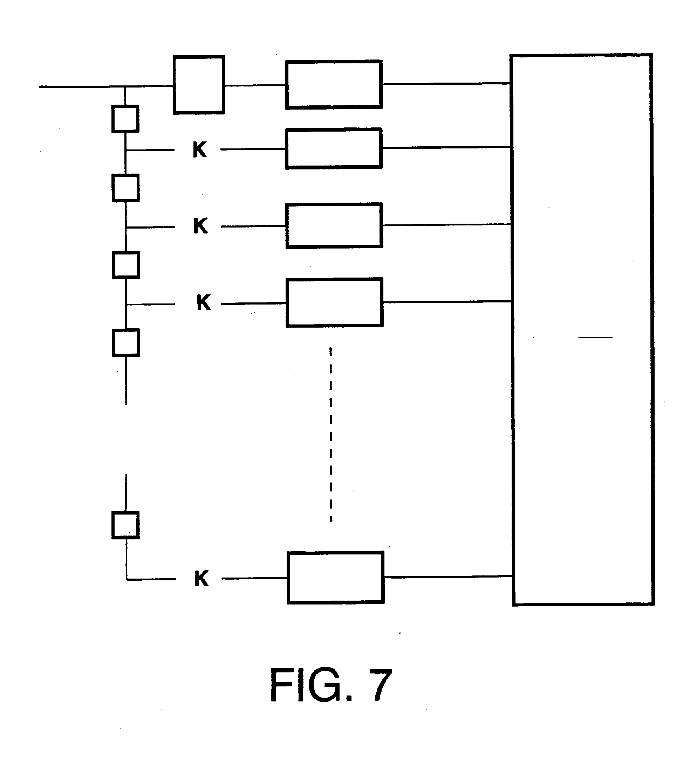

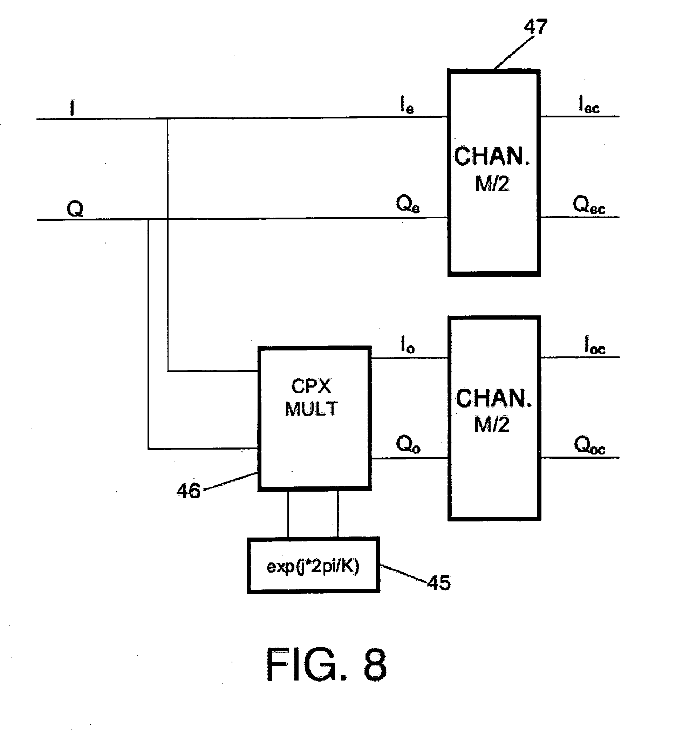

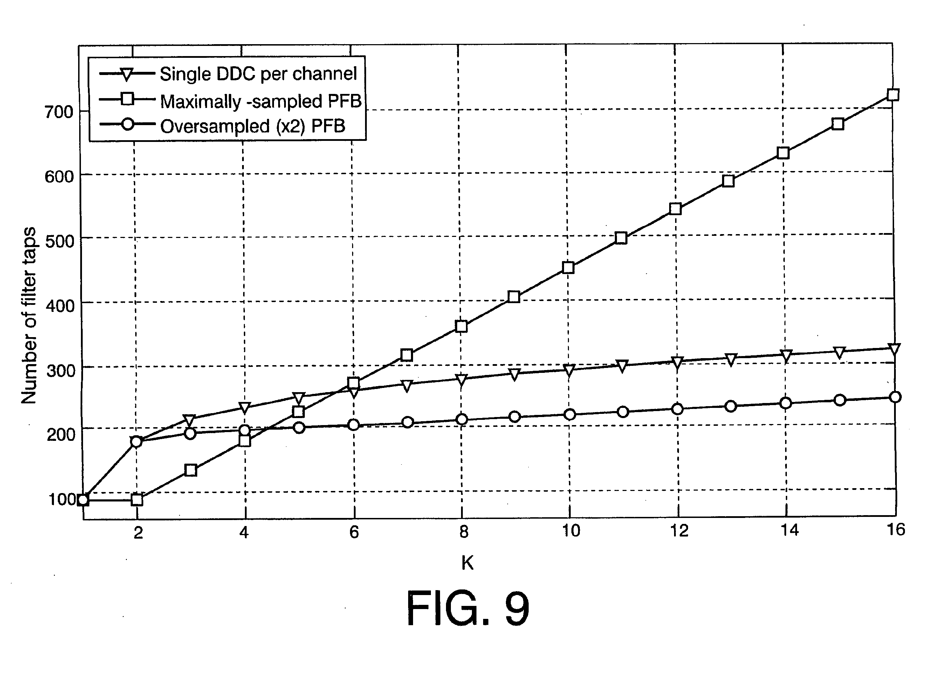

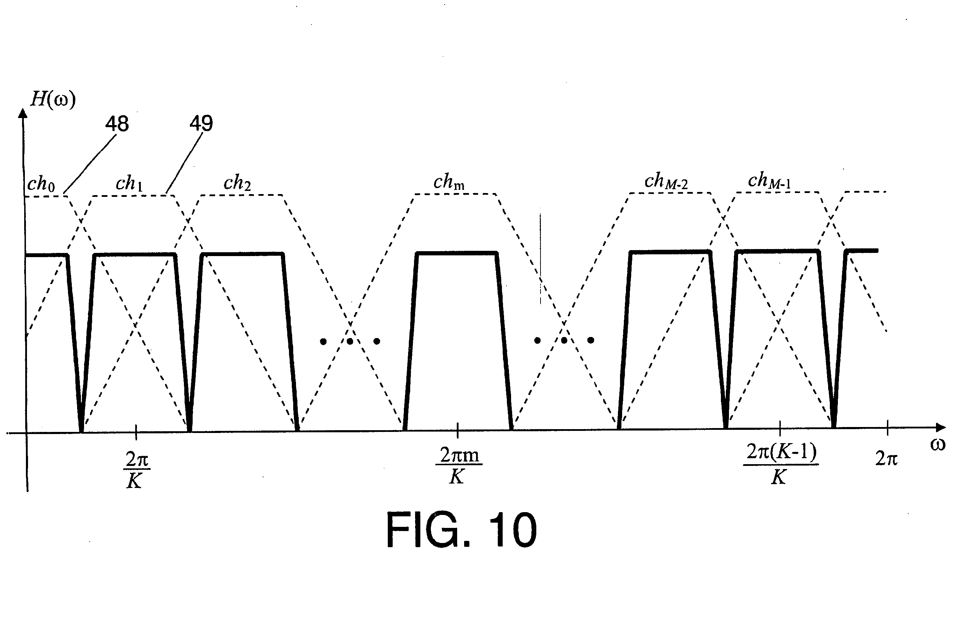

The channelizer is in charge of extracting from the multichannel signal each of the TV channels, passing them to baseband so that they can subsequently be filtered. This process has traditionally been performed by means of down conversions for each channel, each of them with their decimator FIR filters, as is shown in Figure 6. However, the system of the present invention comprises a polyphase-FFT filter, the classic architecture of which is shown in Figure 7. Rather than using said classic architecture, referred to as maximally decimated, the system comprises an oversampling polyphase filter because it is more efficient in terms of computational cost. The term oversampling is used because a total of M channels are processed using to that end 2 polyphase channelizers prepared for K=M/2 channels. In this invention, a simple oversampling technique is applied which consists of separating the even channels from the odd channels and using two polyphase-FFT channelizers, one for the even channels and another one for the odd channels, as indicated in Figure 8 (even channels are considered those with sub-index 0,2,4... whereas odd channels are those with sub-index 1,3,5....). In said figure it can be seen how the signal is divided in two paths, to one of which there is applied a frequency translation 45 of B MHz, or in other words an offset is applied to it which is governed by exp(j*2*pi/K), such that an odd channel is centered at 0 MHz. Subsequently, a channelizer M/2 47 is applied to the even channels and another one to the odd channels. Figure 9 shows the difference of computational cost (in weights or taps of FIR filters) between a maximally decimated channelizer and another oversampling channelizer. Despite the fact that the maximally decimated filter is optimal in terms of architecture, when it is applied to TV channels with a narrow frequency separation it is nonviable because it requires a base filter H(z) with more than 700 taps for K = 16. In contrast, the oversampling filter can give the sensation of inefficiency upon duplicating resources, but it is especially useful for the application of multichannel TV filtering, as can be seen in the comparative results, needing only 240 taps for K=16. The base filters of the oversampling polyphase channelizer are much more relaxed, as can be seen in Figure 10. The effect of the two channelizers both for the even channels 48 and for the odd channels 49 can be seen in said figure in solid and dotted lines, respectively. These base filters are much more relaxed because they have transition bands of at least B Mhz.

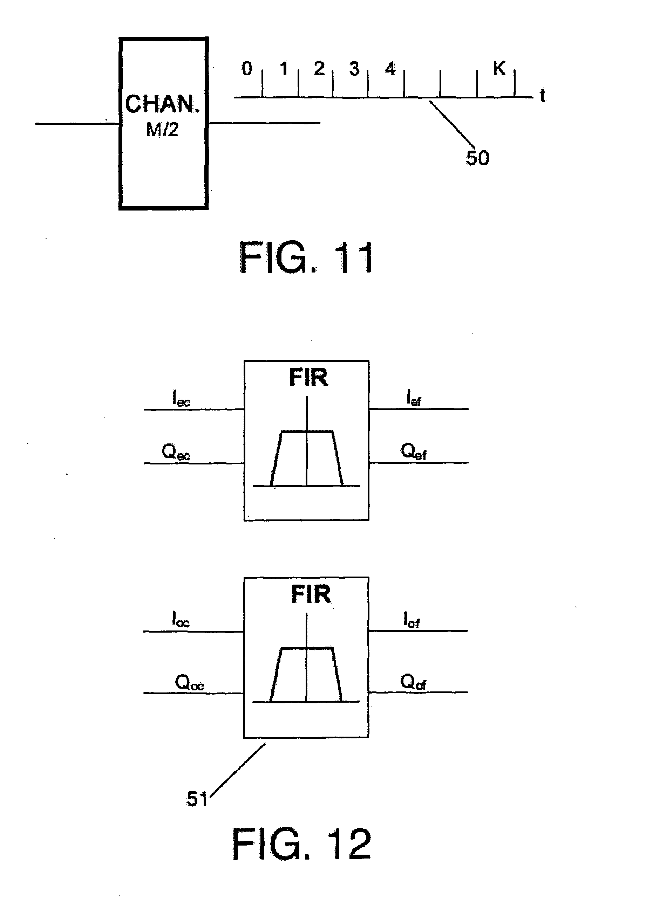

The output of the polyphase channelizer consists of a bus for the even channels and another one for the odd channels, in which all the channels are time multiplexed 50 because the sampling frequency is K times greater, as is shown in Figure 11.

After separating each of the TV channels in an oversampled manner, a selective filtering is applied to each of them at this time to prevent adjacent channel interference when recombining. At this time filtering is applied to each baseband channel with an FIR filter 51 of 110 taps. This filter is traditionally used for the digital filtering of a single TV channel in order for it to meet the specifications of the terrestrial digital video broadcast with respect to the adjacent channel power ratio (ACPR)

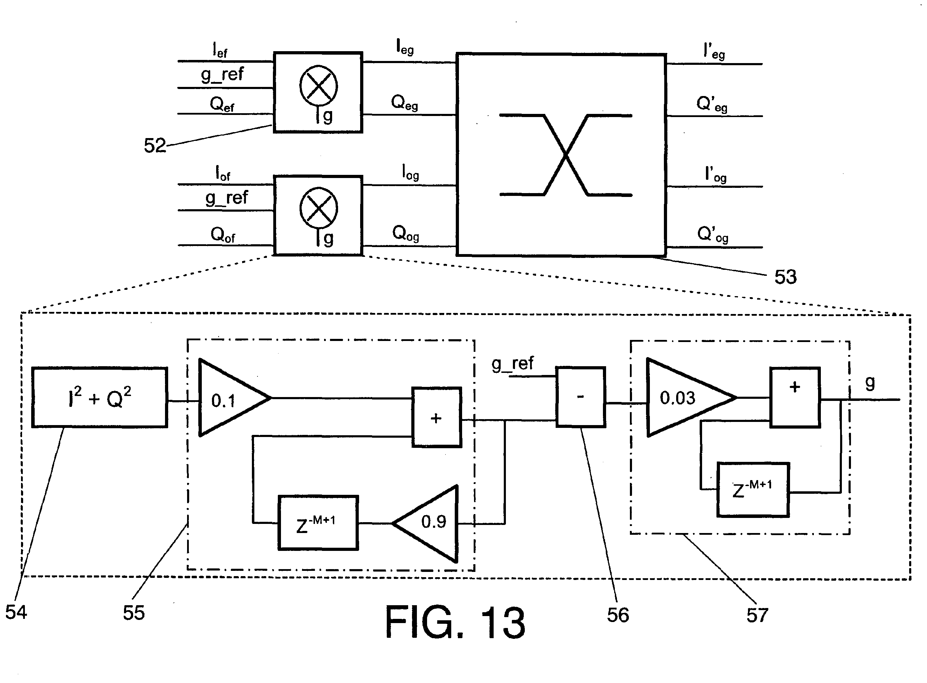

Once the TV channels are filtered in baseband, their power level is equalized by means of a digital automatic gain control (AGC) 52 applied on the two buses, the even and the odd buses. Despite the fact that each bus carries K time multiplexed channels, the AGC is applied to all of them by taking advantage of the fact that the system works K times faster than the sampling frequency of each channel. The level is configured by means of a global processor system which establishes the output power of all the channels through a signal referred to as g_ref. This AGC in turn has an energy detector in charge of deciding whether or not a TV channel is present by means of comparing its input power level with respect to a threshold configured through a global processor system. Noise is thus completely removed from the non-existing channels or the interference residues which are not to be amplified. As can be observed in the diagram of Figure 13, the AGC consists of the input with an instantaneous power estimator 54, the output of which passes through a first integrator system 55 for obtaining an estimate of the mean power. Said power is compared with/subtracted from the target power g_ref configured for all the channels, and the resulting difference passes to another accumulator block 57 offering the instantaneous value g by which the signal must be multiplied to reach the target power. It must be observed that said system is applied to the M channels of each even and odd path, so in order to synchronize the mechanism it is necessary to include M-1 delays in the integrator block 55 and accumulator block 57, as shown in the figure.

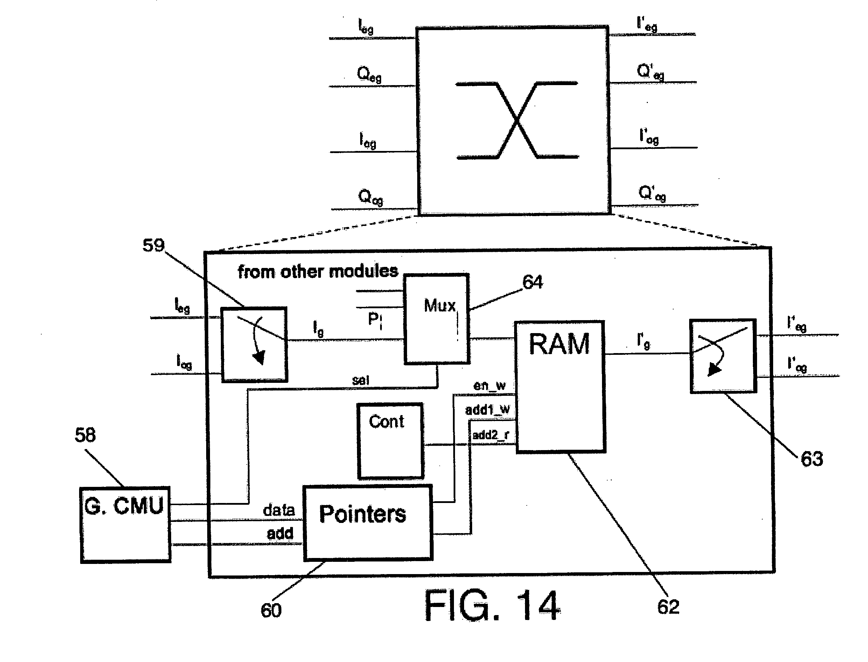

After equalizing the power levels, the TV channels pass to a local channel management unit 53 (i.e., it is a local block for the transceiver module which contains it). This local channel management unit of each transceiver module is in charge of tasks relating to the handling and management of the TV channels, such as the frequency switching thereof (in MFN repeaters, for example) and the suppression and addition of channels outside the module. The local channel management units of each transceiver module of the invention are controlled in a centralized manner by a global channel management unit 58, which is in charge of the global management of the TV channels as well as of the interface with the external user. Figure 14 shows the diagram of the local CMU, as well as the control performed thereon by the global CMU 58. It can be seen how the local system essentially consists of a dual port memory 62 in which the reading is always performed by a counter 61 continuously running in said memory, and the writing is carried out by a block of pointers 60 which establishes the addresses where each channel must be recorded and therefore placed. As previously discussed, an alteration in the time position of the channel bus in practice involves a frequency translation of L channels depending on the time slot in which it is located. The block of pointers 60 has the ratios between the channels of said transceiver module with their position in the frame of M channels recorded therein at all times. It must observed at this point that it is possible to switch even and odd channels, whereby increasing the working frequency to twice its level both buses are joined in a single common bus 59. At the output it returns to the original situation of two buses 63. The global channel management unit 58 takes care of writing the block of pointers 60 of the P transceiver modules of the system. It is also in charge of controlling the multiplexor 64 present at the inlet of the memories 62 of the P modules. This multiplexor is necessary because any channel of the remaining modules can access the P-th, and to that end a control must be performed on a global level. Finally, the global channel management unit 58 is also in charge of the frequency switching of channels between different transceiver modules 3, i.e., it extracts from a first transceiver module a television channel, originally multiplexed at a first frequency, and sends it by means of a high speed bus to a second transceiver module which again multiplexes said television channel at a second frequency (target frequency).

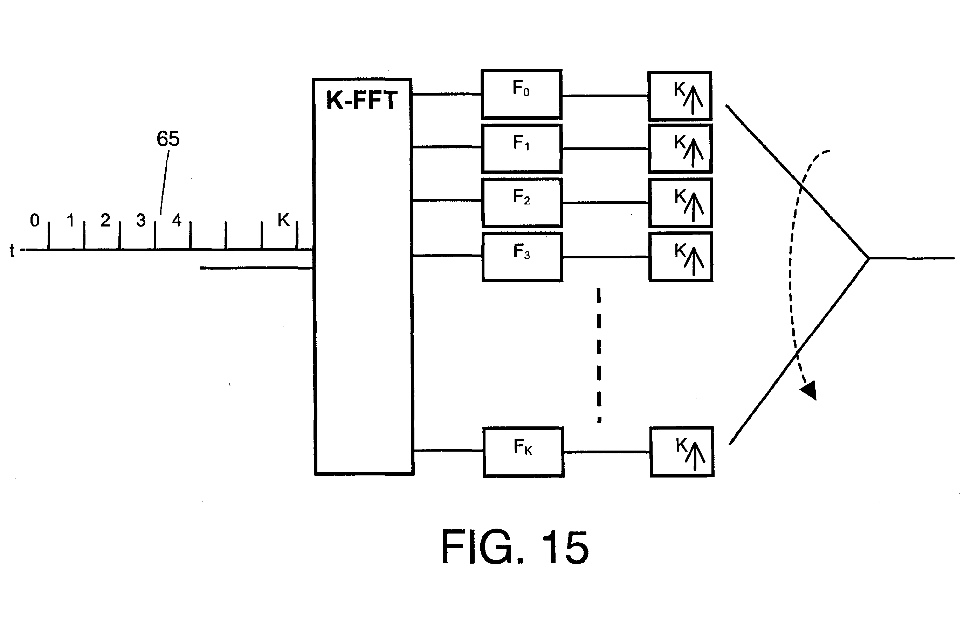

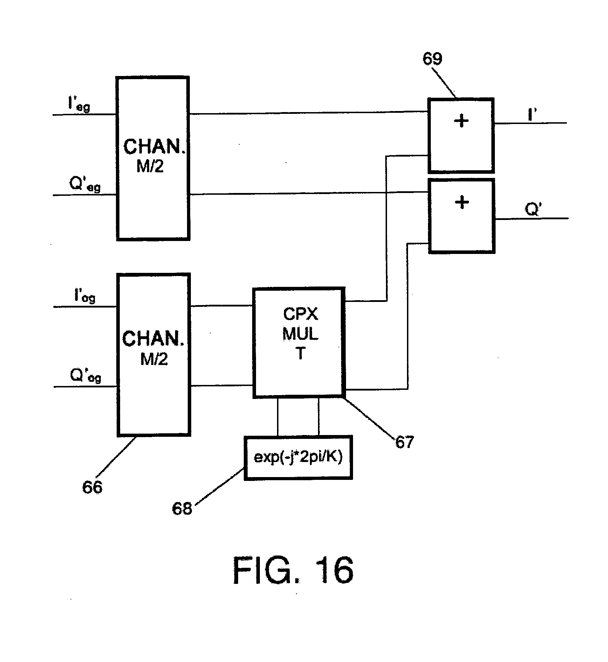

At the output of the CMU block, the M filtered and equalized TV channels are ready to be transmitted. To that end, they enter the polyphase-FFT dechannelizer block, a possible implementation of which is presented in Figure 15. The polyphase-FFT filter acts as a channel combiner, i.e., it performs the reverse process with respect to the one performed in the polyphase-FFT channelizer and puts each TV channel in its corresponding frequency. After the M/2 channelizers 66, the even and odd buses are combined, as indicated in Figure 16, by undoing the frequency translation previously performed. To that end, a multiplier (67) is used which multiplies by the conjugate complex of said previous translation, i.e., by exp(-j*2*pi/K) 68, thus returning the odd channels to their original frequency; and a combiner 69 which combines said odd channels with the even channels.

At the output of the polyphase-FFT dechannelizer, a signal of M previously filtered and equalized TV channels is obtained. For the implementations based on heterodyne conversion and RF digitization, the signal is IQ modulated at this time to generate a real output of the system and attacking the DAC. For the homodyne implementation, the I and Q output branches of the polyphase FFT dechannelizer enter directly into a DAC device for each branch.

The DAC used in the transceiver modules of the invention is based for all the implementations on a device which consists of one or several interpolating filters and a digital to analog conversion system. The interpolating filters are used to filter and simultaneously increase the sampling frequency and to thus make the design of the analog reconstruction filter after the DAC simpler. Without the interpolating filters, the image frequencies occurring when passing from digital to analog are difficult to eliminate by means of simple reconstruction filters. With the use of a DAC with interpolating filters, the reconstruction filter can be a very low order low pass, a third order, for example. To compensate for its use, a DAC with a higher sampling frequency is required. Following the example of M=7 channels per transceiver module, the sampling frequency of the DAC will be at least 256 Msps for the homodyne implementation, 512 Msps for the heterodyne implementation and 2 Gsps for RF digitization.

After exiting the block of the DAC and reconstruction filter, the analog signal consisting of the M filtered and equalized TV channels enters an RF mixer (24, 35) through the same frequency generated by the local oscillator 11 or PLL used in the receiving part (as previously, only for the heterodyne and homodyne implementations, which are those which establish a frequency conversion). The signal with the M filtered and equalized TV channels centered in the same RF frequency which was used at reception is left at the output. In the case of the RF digitization implementation, not type of conversion, with the interpolating filters of the DAC, is used because the signal directly places the frequency corresponding to it in RF.

Finally, the signal with the M TV channels enters a power amplifier 26 to provide the power required by subsequent stages of the television broadcast system.

After the power amplification, the signal exits the system through a combiner 5 which joins the outputs of all the bands handled by K transceivers systems and once combined, the resulting signal is sent out through an antenna in the case of repeaters, or through a coaxial cable in the case of a TV distribution system in neighborhood communities.

In view of this description and figures, the person skilled in the art may understand that the invention has been described according to preferred embodiments thereof, but that multiple variations can be introduced in said preferred embodiments without departing from the object of the invention as it has been claimed.

## Claims

1. Television channel amplification system comprising receiving means (1) for receiving an analog input signal on which a plurality of television channels with a plurality of powers are multiplexed, **characterized in that** it furthermore comprises:
- a power divider (2) configured to transmit the analog input signal to a plurality of transceiver modules;
- the plurality of transceiver modules (3), each of said modules in turn comprising:
- conversion means configured to convert the analog input signal into a digital input signal;
- filtering means suitable for selecting an integral number M of multiplexed television channels in the digital input signal;
- and gain control means (18) configured to equalize the powers of the plurality of selected television channels;
- and combination means configured to combine in one output signal the television channels the power of which is equalized by the plurality of transceiver modules.

2. Amplification system according to claim 1, **characterized in that** the filtering means in turn comprise a polyphase filter (16) of a number M of channels and **in that** each transceiver module (3) in turn comprises a polyphase combiner (20) of said number M of channels.

3. Amplification system according to any of the previous claims, **characterized in that** it comprises a low noise amplifier (8) suitable for amplifying the input signal.

4. Amplification system according to any of the previous claims, **characterized in that** it comprises a power amplifier (26) suitable for amplifying the output signal.

5. Amplification system according to any of the previous claims, **characterized in that** the conversion means in turn comprise:
- mixing means configured to convert the analog signal at an intermediate frequency;
- digitization means (14) configured to work at said intermediate frequency;
and **in that** each transceiver module (3) comprises a digital in-phase quadrature demodulator (21)

6. Amplification system according to claim 5, **characterized in that** the mixing means in turn comprise:
- an oscillator (11) configured to generate the intermediate frequency;
- a converter (10) configured to mix the analog signal with the intermediate frequency generated by the oscillator;
- and a low pass filter(12) configured to allow passing the intermediate frequency.

7. Amplification system according to claim 6, **characterized in that** the mixing means furthermore comprise automatic gain control means (13) in the intermediate frequency.

8. Amplification system according to any of claims 1 to 4, **characterized in that** the conversion means in turn comprise:
- an analog in-phase quadrature mixer (28) configured to generate two components of the input signal in baseband;
- two analog-to-digital converters (32) configured to digitalize the two components generated from said baseband.

9. Amplification system according to claim 8, **characterized in that** the conversion means furthermore comprise:
- two low pass filters (30) configured to allow passing the two components in baseband;
- two automatic gain control means (31) in baseband.

10. Amplification system according to any of claims 1 to 4, **characterized in that** the conversion means in turn comprise a high speed analog-to-digital converter (39) configured to operate at the frequency of the television channels in the analog input signal.

11. Amplification system according to claim 10, **characterized in that** each transceiver module (3) comprises furthermore:
- a bandpass filter (37) at the frequency of the television channels in the analog input signal;
- and an amplifier at said frequency of the television channels (38).

12. Amplification system according to any of the previous claims, **characterized in that** the gain control means (18) in turn comprise:
- estimation means configured to estimate a power of each television channel;
- comparison means (56) configured to determine a necessary gain for obtaining a target power from the power of each channel;
- amplification means (57) configured to apply said necessary gain to each television channel;

13. Amplification system according to claim 12, **characterized in that** said amplification means (57) comprise delay means configured to delay the application of the gain a number M-1 of time slots of a time multiplexed signal.

14. Amplification system according to any of the previous claims, **characterized in that** each transceiver module (3) comprises local channel control means (19) configured to transfer frequency-wise at least one television channel within a frequency range operated by said transceiver module (3).

15. Amplification system according to any of the previous claims, **characterized in that** the system furthermore comprises global channel control means (4) configured to extract from a first transceiver module at least one television channel multiplexed at a first frequency, and multiplex said at least one television channel in a second transceiver module at a second frequency.

## Patentansprüche

1. Fernsehkanalverstärkungssystem umfassend Empfangsmittel (1) zum Empfangen eines analogen Eingangssignals, auf dem eine Mehrzahl von Fernsehkanälen mit einer Mehrzahl von Stärken gemultiplext sind, **dadurch gekennzeichnet, dass** es außerdem umfasst:
- einen Stärketeiler (2), eingerichtet zum Übertragen des analogen Eingangssignals zu einer Mehrzahl von Transceivermodulen;
- die Mehrzahl von Transceivermodulen (3), wobei jedes der Module wiederum umfasst:
- Umwandlungsmittel, eingerichtet zum umwandeln des analogen Eingangssignals in ein digitales Eingangssignal;
- Filtermittel, geeignet zum Auswählen einer ganzen Anzahl M gemultiplexter Fernsehkanäle im digitalen Eingangssignal;
- und Verstärkungsregelungsmittel (18), eingerichtet zum Angleichen der Stärken der Mehrzahl ausgewählter Fernsehkanäle;
- und Kombinationsmittel, eingerichtet zum kombinieren der Fernsehkanäle, deren Stärke durch die Mehrzahl von Transceivermodulen angeglichen ist, zu einem Ausgangssignal.

2. Verstärkungssystem nach Anspruch 1, **dadurch gekennzeichnet, dass** das Filtermittel wiederum ein Mehrphasenfilter (16) einer Anzahl M von Kanälen umfasst und dass jedes Transceivermodul (3) wiederum einen Vielphasenkombinierer (20) der Anzahl von M Kanälen umfasst.

3. Verstärkungssystem nach einem der vorgenannten Ansprüche, **dadurch gekennzeichnet, dass** es einen rauscharmen Verstärker (8), geeignet zum Verstärken des Eingangssignals, umfasst.

4. Verstärkungssystem nach einem der vorgenannten Ansprüche, **dadurch gekennzeichnet, dass** es einen Leistungsverstärker (26), geeignet zum Verstärken des Ausgangssignals, umfasst.

5. Verstärkungssystem nach einem der vorgenannten Ansprüche, **gekennzeichnet dadurch, dass** die Umwandlungsmittel wiederum umfassen:
- Mischmittel, eingerichtet zum Umwandeln des analogen Signals bei einer Zwischenfrequenz;
- Digitalisierungsmittel (14), eingerichtet zum Arbeiten bei der Zwischenfrequenz;
und dadurch, dass jedes Transceivermodul (3) einen digitalen, gleichphasigen Quadraturmodulator umfasst.

6. Verstärkungssystem nach Anspruch 5, **dadurch gekennzeichnet, dass** das Mischmittel wiederum umfasst:
- einen Oszillator (11), eingerichtet zum Erzeugen der Zwischenfrequenz;
- einen Umwandler (10), eingerichtet zum Mischen des analogen Signals mit der vom Oszillator (11) erzeugten Zwischenfrequenz;
- einen Tiefpassfilter (12), eingerichtet zum Zulassen des Durchgangs der Zwischenfrequenz.

7. Verstärkungssystem nach Anspruch 6, **dadurch gekennzeichnet, dass** das Mischmittel außerdem ein automatisches Verstärkungsregelungsmittel (13) in der Zwischenfrequenz umfasst.

8. Verstärkungssystem nach einem der Ansprüche 1 bis 4,
**dadurch gekennzeichnet, dass** das Umwandlungsmittel wiederum umfasst:
- einen analogen, gleichphasigen Quadraturmischer (28), eingerichtet zum Erzeugen zweier Komponenten des Eingangssignals im Basisband;
- zwei analog-digital-Wandler (32), eingerichtet zum Digitalisieren der beiden vom Basisband erzeugten Komponenten.

9. Verstärkungssystem nach Anspruch 8, **dadurch gekennzeichnet, dass** das Umwandlungsmittel weiter umfasst:
- zwei Tiefpassfilter (30), eingerichtet zum Zulassen des Durchgangs der zwei Komponenten im Basisband;
- zwei automatische Verstärkungsregelungsmittel (31) im Basisband.

10. Verstärkungssystem nach einem der Ansprüche 1 bis 4,
**dadurch gekennzeichnet, dass** das Umwandlungsmittel wiederum einen Hochgeschwindigkeits-analog-digital-Wandler (39) umfasst, eingerichtet, zum Arbeiten auf der Frequenz der Fernsehkanäle im analogen Eingangssignal.

11. Verstärkungssystem nach Anspruch 10, **dadurch gekennzeichnet, dass** jedes Transceivermodul (3) weiter umfasst:
- ein Bandpassfilter (37) bei der Frequenz der Fernsehkanäle im analogen Eingangssignal;
- und einen Verstärker bei der Frequenz der Fernsehkanäle (38).

12. Verstärkungssystem nach einem der vorgenannten Ansprüche, **dadurch gekennzeichnet, dass** die
Verstärkungsregelungsmittel (18) wiederum umfassen:
- Schätzmittel, eingereichtet zum Schätzen der Stärke jedes Fernsehkanals;
- Vergleichsmittel (56), eingerichtet zum Bestimmen einer notwendigen Verstärkung zum Erreichen einer Zielstärke aus der Stärker jedes Kanals;
- Verstärkungsmittel (57), eingerichtet zum Aufbringen der notwendigen Verstärkung auf jeden Fernsehkanal.

13. Verstärkungssystem nach Anspruch 12, **dadurch gekennzeichnet, dass** das Verstärkungsmittel (57) Verzögerungsmittel umfasst, eingerichtet zum Verzögern der Aufbringung der Verstärkung um eine Anzahl M-1 Zeitfenster eines zeitliche gemultiplexten Signals.

14. Verstärkungssystem nach einem der vorgenannten Ansprüche, **dadurch gekennzeichnet, dass** jedes Transceivermodul (3) lokale Kanalregelungsmittel (19) umfasst, eingerichtet zum frequenzweisen Übertragen zumindest eines Fernsehkanals innerhalb eines vom jeweiligen Transceivermoduls (3) verarbeiteten Frequenzbereichs.

15. Verstärkungssystem nach einem der vorgenannten Ansprüche, **dadurch gekennzeichnet, dass** das System außerdem globale Kanalregelungsmittel (4) umfasst, eingerichtet zum Extrahieren zumindest eines bei einer ersten Frequenz gemultiplexten Fernsehkanals aus einem ersten Transceivermodul und zum Multiplexen dieses mindestens einen Fernsehkanals in einem zweiten Transceivermodul bei einer zweiten Frequenz.

## Revendications

1. Système d'amplification de canaux de télévision comprenant un moyen de réception (1) destiné à recevoir un signal d'entrée analogique sur lequel une pluralité de canaux de télévision avec plusieurs puissances sont multiplexés, **caractérisé en ce qu'**il comprend en outre :
un diviseur de puissance (2) configuré pour transmettre le signal d'entrée analogique à une pluralité de modules émetteurs-récepteurs ;
la pluralité de modules émetteurs-récepteurs (3), chacun desdits modules comprenant à son tour :
un moyen de conversion configuré pour convertir le signal d'entrée analogique en un signal d'entrée numérique ;
un moyen de filtrage apte à sélectionner un nombre entier M de canaux de télévision multiplexés dans le signal d'entrée numérique ;
et un moyen de commande de gain (18) configuré pour égaliser les puissances de la pluralité de canaux de télévision sélectionnés ;
et un moyen de combinaison configuré pour combiner en un seul signal de sortie les canaux de télévision dont la puissance est égalisée par la pluralité de modules émetteurs-récepteurs.

2. Système d'amplification selon la revendication 1, **caractérisé en ce que** les moyens de filtrage comprennent à leur tour un filtre polyphasé (16) d'un nombre M de canaux et **en ce que** chaque module émetteur-récepteur (3) comprend à son tour un combinateur polyphasé (20) dudit nombre M de canaux.

3. Système d'amplification selon l'une des revendications précédentes, **caractérisé en ce qu'**il comprend un amplificateur à faible bruit (8) apte à amplifier le signal d'entrée.

4. Système d'amplification selon l'une des revendications précédentes, **caractérisé en ce qu'**il comprend un amplificateur de puissance (26) apte à amplifier le signal de sortie.

5. Système d'amplification selon l'une des revendications précédentes, **caractérisé en ce que** les moyens de conversion comprennent à leur tour :
un moyen de mélange configuré pour convertir le signal analogique à une fréquence intermédiaire ;
un moyen de numérisation (14) configuré pour fonctionner à ladite fréquence intermédiaire ;
et **en ce que** chaque module émetteur-récepteur (3) comprend un démodulateur en quadrature de phase numérique (21).

6. Système d'amplification selon la revendication 5, **caractérisé en ce que** les moyens de mélange comprennent à leur tour :
un oscillateur (11) configuré pour générer la fréquence intermédiaire ;
un convertisseur (10) configuré pour mélanger le signal analogique avec la fréquence intermédiaire générée par l'oscillateur ;
et un filtre passe-bas (12) configuré pour permettre le passage de la fréquence intermédiaire.

7. Système d'amplification selon la revendication 6, **caractérisé en ce que** les moyens de mélange comprennent en outre un moyen de commande de gain automatique (13) dans la fréquence intermédiaire.

8. Système d'amplification selon l'une des revendications 1 à 4, **caractérisé en ce que** les moyens de conversion comprennent à leur tour :
un mélangeur en quadrature de phase analogique (28) configuré pour générer deux composantes du signal d'entrée en bande de base ;
deux convertisseurs analogique-numérique (32) configurés pour numériser les deux composantes générées à partir de ladite bande de base.

9. Système d'amplification selon la revendication 8, **caractérisé en ce que** les moyens de conversion comprennent en outre :
deux filtres passe-bas (30) configurés pour permettre le passage des deux composantes en bande de base ;
deux moyens de commande de gain automatique (31) en bande de base.

10. Système d'amplification selon l'une des revendications 1 à 4, **caractérisé en ce que** les moyens de conversion comprennent à leur tour un convertisseur analogique-numérique à grande vitesse (39) configuré pour fonctionner à la fréquence des canaux de télévision dans le signal d'entrée analogique.

11. Système d'amplification selon la revendication 10, **caractérisé en ce que** chaque module émetteur-récepteur (3) comprend en outre :
un filtre passe-bande (37) à la fréquence des canaux de télévision dans le signal d'entrée analogique ;
et un amplificateur à ladite fréquence des canaux de télévision (38).

12. Système d'amplification selon l'une des revendications précédentes, **caractérisé en ce que** les moyens de commande de gain (18) comprennent à leur tour :
un moyen d'estimation configuré pour estimer une puissance de chaque canal de télévision ;
un moyen de comparaison (56) configuré pour déterminer un gain nécessaire pour obtenir une puissance cible à partir de la puissance de chaque canal ;
un moyen d'amplification (57) configuré pour appliquer ledit gain nécessaire à chaque canal de télévision.

13. Système d'amplification selon la revendication 12, **caractérisé en ce que** lesdits moyens d'amplification (57) comprennent des moyens de retard configurés pour retarder l'application du gain d'un nombre M-1 de créneaux temporels d'un signal multiplexé dans le temps.

14. Système d'amplification selon l'une des revendications précédentes, **caractérisé en ce que** chaque module émetteur-récepteur (3) comprend un moyen de commande de canal local (19) configuré pour transférer en fréquence au moins un canal de télévision à l'intérieur d'une plage de fréquences exploitée par ledit module émetteur-récepteur (3).

15. Système d'amplification selon l'une des revendications précédentes, **caractérisé en ce que** le système comprend en outre un moyen de commande de canal global (4) configuré pour extraire à partir d'un premier module émetteur-récepteur au moins un canal de télévision multiplexé à une première fréquence, et pour multiplexer ledit au moins un canal de télévision dans un deuxième module émetteur-récepteur à une deuxième fréquence.
